Europäisches Patentamt

European Patent Office

Office européen des brevets

(19)

(11) Veröffentlichungsnummer : **0 097 773**
B1

(12) **EUROPÄISCHE PATENTSCHRIFT**

(45) Veröffentlichungstag der Patentschrift :
**18.06.86**

(51) Int. Cl.⁴ : **B 66 C  1/06**, B 65 G 47/92

(21) Anmeldenummer : **83103233.9**

(22) Anmeldetag : **31.03.83**

(54) **Hebemagnet mit Sensoreinrichtung.**

(30) Priorität : **02.04.82 DE 3212465**

(43) Veröffentlichungstag der Anmeldung :
**11.01.84 Patentblatt 84/02**

(45) Bekanntmachung des Hinweises auf die Patenterteilung : **18.06.86 Patentblatt 86/25**

(84) Benannte Vertragsstaaten :
**AT CH DE FR GB IT LI**

(56) Entgegenhaltungen :
DE-A- 1 901 611
DE-A- 2 554 046
DE-A- 2 652 188

(73) Patentinhaber : **EMAG MASCHINENFABRIK GMBH
Austrasse 24
D-7335 Salach/Württemberg (DE)**

(72) Erfinder : **Metz, Rudi
Dr.-Frey-Strasse 50
D-7322 Donzdorf (DE)**
Erfinder : **Scholl, Herbert, Dr. Dipl.-Phys.
Buchenrain 149
D-7320 Göppingen (DE)**

(74) Vertreter : **Zmyj, Erwin, Dipl.-Ing.
Postfach 95 04 28
D-8000 München 95 (DE)**

## Beschreibung

Die Erfindung bezieht sich auf eine Hebevorrichtung mit zumindest einem Haftmagneten und zumindest einer davon unabhängigen Sensoreinrichtung, durch die die Änderung des Magnetfeldes infolge Eindringens eines ferromagnetischen oder eines entsprechend Metallen elektrisch leitenden Teiles in das Magnetfeld erfaßbar und zur Auslösung von Steuerungsvorgängen verwendbar ist.

Bei einer bekannten Hebevorrichtung dieser Art (DE-A-2 554 046), ist einem Hebemagnet eine Sensoreinrichtung in Form einer Induktionsspule zugeordnet. In dieser wird bei einer Feldänderung eine Spannung induziert, die zur Steuerung der gewünschten Schaltvorgänge ausgenutzt werden kann. Mit dieser bekannten Anordnung läßt sich zwar die relative Lage des ferromagnetischen Gegenstandes in bezug auf den Hebemagneten feststellen, doch nur deshalb, weil das Eindringen des ferromagnetischen Teiles in das Magnetfeld feststellbar ist, und durch das dort vorgesehene Transportband die Richtung, aus der sich der Gegenstand in bezug auf den Hebemagneten bewegt, vorgegeben ist.

Bei einer weiteren Hebevorrichtung (DE-A-1 901 611) dient die Sensoreinrichtung nur zur Feststellung der Tatsache, ob ein Fülllochdeckel einer Verkokungskammer an einem Gleichstrom-Lastmagneten festhängt oder nicht, um hierdurch den automatisch erfolgenden Befüllvorgang dieser Verkokungseinrichtung einleiten zu können. Bei dieser bekannten Einrichtung ist es also möglich, das Eindringen eines ferromagnetischen Teiles in das Magnetfeld festzustellen, doch besteht nicht die Möglichkeit, die genaue Lage des Teiles gegenüber dem Magneten zu erfassen.

Aufgabe der Erfindung ist es, eine Hebevorrichtung der vorstehend erläuterten Art so auszugestalten, daß diese gleichzeitig als ein Sensor für die Erfassung der genauen Lage eines zu transportierenden Teiles in bezug auf den Hebemagneten dienen kann.

Diese Aufgabe wird bei einer Hebevorrichtung der im Oberbegriff des Anspruchs 1 angegebenen Art erfindungsgemäß dadurch gelöst, daß zumindest zwei Sensoreinrichtungen symmetrisch in bezug auf das Zentrum und die beiden horizontalen Hauptachsen der Magnetpolanordnung angeordnet sind.

Unter einer Sensoreinrichtung ist eine Einrichtung, wie z. B. eine Magnetspule oder ein Hallgenerator, zu verstehen, die bei Magnetfeldänderungen Änderungen ihrer physikalischen Eigenschaften erfährt, die meßbar und zur Auslösung von Steuervorgängen verwendbar sind.

Durch die im Anspruch 1 angegebene Anordnung einer Sensoreinrichtung ist die gewünschte Richtungsempfindlichkeit erzielbar. Hierdurch kann aufgrund der Größe der erfaßbaren Magnetfeldänderungen festgestellt werden, ob der Hebemagnet nur mit einem Teil seiner Fläche über dem Werkstück oder vollständig über diesem Werkstück bzw. einem anderen ferromagnetischen oder einem anderen Gegenstand mit entsprechend Metallen elektrischer Leitfähigkeit liegt. Bei Anwendung von mehrals zwei Sensoreinrichtungen ist die Annäherungsrichtung des Hebemagneten zum Werkstück genauer feststellbar, weil diejenige Sensoreinrichtung, die dem Werkstück am nächsten liegt eine stärkere Magnetfeldänderung erfaßt, als die weiter weg liegenden Sensoreinrichtungen. Hierdurch ist es möglich den Hebemagneten oder die Hebemagnete symmetrisch über ein Werkstück zu bringen, um das Werkstück in seiner Mitte zu erfassen. Dies ist nicht nur für die sichere Erfassung eines Werkstückes notwendig, damit dieses nicht aufgrund von einseitig überstehenden Teilen wieder vom Hebemagneten abfällt, sondern eine solche genaue Positionierung des Hebemagneten in bezug auf das Werkstück ist auch bei Ladevorrichtungen erwünscht, mit denen Bearbeitungsvorrichtungen, beispielsweise Drehmaschinen, automatisch beschickt werden sollen. Außerdem ist es für den Fall, daß mit Hilfe des Hebemagneten oder zusätzlich am Hebemagneten angeordneter spulen eine Entmagnetisierung des Werkstückes oder sonstiger Einrichtungen vorgenommen werden sollen, wesentlich zu erkennen, in welcher räumlichen Zuordnung sich der zu entmagnetisierende Gegenstand in bezug auf den Magneten befindet.

Um die Empfindlichkeit der Anzeige einer Magnetfeldänderung zu erhöhen kann in weiterer vorteilhafter Ausgestaltung der Erfindung bei Anordnung der Sensoreinrichtung zwischen den Polen, der Polabstand veränderbar sein. Durch Veränderung des Polabstandes wird das Verhältnis von Streufluß zu Nutzfluß verändert, wodurch beispielsweise bei einer Verkleinerung des Polabstandes und der Anordnung einer der Sensoreinrichtungen zwischen den Polen diese Sensoreinrichtung wesentlich empfindlicher auf eine Magnetfeldänderung anspricht als bei einem großen Polabstand.

Eine vorteilhafte Weiterbildung der Erfindung besteht darin, daß wenigstens ein Eisenleitstück des Hebemagneten, das die Erregerwicklung mit dem Magnetpol verbindet aus mindestens zwei wenigstens teilweise teleskopartig ineinanderschiebbaren Teilen aufgebaut ist und daß eine der Sensoreinrichtungen dem ausfahrbaren Teil bzw. den am weitesten ausfahrbaren Teilen zugeordnet ist bzw. sind.

Aufgrund dieser Ausgestaltung ist es beispielsweise möglich, zwischen zwei Magnetpolen ausfahrbare Eisenleitteile, die mit jeweils einem Pol in Verbindung stehen also unterschiedliche Polarität aufweisen, aus einem Hebemagneten ausfahrbar zur führen und zwischen diesen ausfahrbaren Teilen eine der Sensoreinrichtungen vorzusehen, wodurch diese Sensoreinrichtung zwischen zwei sehr eng benachbarten Polen liegt und dadurch wesentlich empfindlicher auf einen ferromagnetischen Körper reagiert als dies mit Sensoreinrichtungen möglich ist, die den festen Polen des Haftmagneten zugeordnet sind welche einen wesentlich größeren Abstand zueinander aufweisen, als dies bei den ausfahrbaren Eisenleitteilen, die die gleiche Polarität wie die Pole des Hebemagneten aufweisen, der Fall ist. Mit solchen ausfahrbaren Teilen läßt sich also bei einem großen Hebemagneten, der beispielsweise zueinander geneigte Polflächen aufweist, wodurch die äußeren Enden der Pole einen großen Abstand zueinander haben, durch Ausschieben dieser Teile erreichen, daß das Zentrum des Hebemagneten in Bezug auf das Werkstück sehr viel genauer feststellbar ist, weil die Streuflußänderung zwischen den sehr eng benachbarten ausfahrbaren Teilen gemessen wird und nicht der Streufluß zwischen den weiter auseinanderliegenden Polen des Hebemagneten. Bei Hebemagneten mit quer zur Längsrichtung der Eisenleitteile ausschieben Teilen ist es möglich mit Hilfe dieser ausfahrbaren Teile und den dort zugeordneten Sensoreinrichtungen die Länge des Werkstückes zu erfassen, da es möglich ist, den Magneten mit seinen Sensoreinrichtungen an das Ende eines Werkstückes heranzufahren, was durch die nächstliegende Sensoreinrichtung des Magneten feststellbar ist, um dann mit Hilfe eines oder mehrerer ausfahrbarer Teile, denen jeweils eine Sensoreinrichtung zugeordnet ist, das gegenüberliegende Ende des Werkstückes festzustellen, wodurch es nicht mehr notwendig ist, eine programmierbare Steuerung zu verwenden, welcher die Werkstückstückslänge eingegeben werden muß. Außerdem ist bei einem solchen Hebemagneten mit ausfahrbaren Teilen eine bessere Erfassung des Werkstückes möglich, weil die ausfahrbaren Teile ebenfalls eine Hebewirkung aufweisen und das Werkstück so an mindestens zwei weit voneinander liegenden Stellen erfaßt werden kann.

Die verschiebbaren Teile können frei verschiebbar geführt oder mittels einer Antriebsvorrichtung verschiebbar sein, die einen Elektromotor oder eine hydraulische oder pneumatische Arbeitseinheit umfassen kann. Die frei verschiebbare Ausgestaltung hat dann Vorteile, wenn die ausfahrbaren Teile in Richtung der Eisenleitteile verschiebbar sind, so daß sie aufgrund ihrer freien Verschiebbarkeit und des Eigengewichtes nach unten über die Pole des großen Hebemagneten hervorstehen und so beim Aufsuchen, eines Werkstückes eine besondere Empfindlichkeit der Sensoreinrichtung gewährleisten. Werden Werkstücke kleinerer Abmessungen aufgesucht und aufgenommen, so kann die Hebekraft der ausgeschobenen Teile ausreichend sein um die kleinen Werkstücke anzuziehen und zu transportieren. Bei größeren Werkstücken wird dieses durch die Magnetkraft der großen weiter zurückliegender Polflächen angezogen, so daß durch diesen Anziehvorgang das Werkstück die ausgeschobenen Teile in den Magnet hineindrückt. Die Anordnung einer Antriebsvorrichtung empfiehlt sich vor allen Dingen dann, wenn die Teile quer zur Längsrichtung der Eisenleitteile ausgefahren werden sollen, d. h. wenn die Teile in horizontaler Richtung verfahren werden sollen, so daß die Schwerkraft für diesen Verschiebevorgang nicht herangezogen werden kann.

In Weiterbildung der Erfindung kann die Sensoreinrichtung als Induktionsspule ausgebildet sein oder als Sensoreinrichtung kann ein Halbleiterplättchen (Hall-Generator) dienen. Letztere, kommen insbesondere in Verbindung mit Gleichstrommagneten zur Anwendung.

Um die Empfindlichkeit der Sensoreinrichtungen zu erhöhen wenn diese aus mehreren Spulen oder Halbleiterplättchen bestehen, empfiehlt es sich, die Sensoreinrichtungen nach Art einer Brückenschaltung zu schalten.

Da die erfaßbaren Veränderungen des Magnetfeldes zur Auslösung von Steuervorgängen verwendbar sind, ist es auch möglich, die Stromstärke in den Erregerwicklungen des bzw. der Hebemagnete bei wirksamer Sensoreinrichtung beim Aufsuchen der Werkstücke geringer als beim Transport der Werkstücke einzustellen. Bei Erreichen der richtigen Lage des Magneten gegenüber dem Werkstück kann dann die zum Transport notwendige Stromstärke eingeschaltet werden.

Mindestens einer der Hebemagnete kann zwei- oder mehrpolig ausgebildet sein. Bei mehrpoligen Hebemagneten besteht die Möglichkeit der Anordnung mehrerer Sensoreinrichtungen, so daß die Richtung, aus der sich ein ferromagnetischer Körper in das Magnetfeld hineinbewegt, wesentlich besser feststellbar ist, als wenn nur wenige oder eine einzige Sensoreinrichtung vorgesehen sind bzw. ist.

Mit Hilfe der Sensoreinrichtungen zwischen den Polen wird der Streufluß und mit Hilfe der Sensoreinrichtungen, die um die Pole herum angeordnet sind, wird der Nutzfluß des Magneten gemessen bzw. die Änderungen derselben festgestellt. Unter Berücksichtigung dieser Tatsache ist es gemäß einer Weiterbildung der Erfindung empfehlenswert, daß der Abstand zwischen den Eisenleitstücken des Hebemagneten, die die Verbindung zwischen der Erregerwicklung und den Polen herstellen durch Formgebund der Eisenleitstücke oder durch an diesen angebrachte Zwischenstücke verengt wird, um so das Verhältnis zwischen Nutzfluß und Streufluß einstellen zu können.

Um den verschiedensten Transportproblemen gewachsen zu sein, ist es vorteilhaft, wenn in Weiterbildung der Erfindung der Hebemagnet sowohl für Gleichstromspeisung als auch für Wechselstromspeisung ausgelegt ist. Der Hebemagnet kann dabei mindestens eine Wicklung aufweisen, von denen eine Wicklung aus mehreren parallel verlaufenden Drähten, aufgebaut ist, die bei Wechselstromspeisung parallel und bei Gleichstromspeisung hintereinandergeschaltet sind. Aufgrund dieser Ausgestaltung ist es möglich, daß beim Transport der Werkstücke eine Gleichstromspeisung und kurz vor oder nach dem Ablegen der Werkstücke eine Wechselstromspeisung des Hebemagneten erfolgt, welch letztere beim Abschalten ein Wechselmagnetfeldabnehmender Amplitude erzeugt. Hierdurch wird zum einen erreicht, daß während eines längeren Transportes eine Erwärmung des Werkstückes vermieden wird, da diese Erwärmung nur bei Wechselstromspeisung eintritt und außerdem wird durch die Erzeugung eines Wechselmagnetfeldes abnehmender Amplitude das Werkstück oder andere in unmittelbarer Nähe des Hebemagneten befindliche Gegenstände entmagnetisiert.

Um eine ausreichende Entmagnetisierung zu erreichen empfiehlt es sich, daß beim Umschalten von Gleichstromspeisung auf Wechselstromspeisung kurzzeitig die Amplitude des Wechselmagnetfeldes gegenüber dem Magnetfeld bei Gleichstromspeisung erhöht ist. Dies ist deshalb empfehlenswert, da mit zunehmender Frequenz die Eindringtiefe des Magnetfeldes in das Werkstück abnimmt.

Die Beaufschlagung des mit der Sensoreinrichtung versehenen Magneten kann mit Wechselstrom, Gleichstrom, Gleichstrom mit überlagertem Wechselstrom oder mit nicht geglättetem Gleichstrom erfolgen.

Mindestens einer der Hebemagnete kann in weiterer Ausgestaltung der Erfindung als Permanentmagnet ausgebildet sein und zwischen seinen Polen bzw. Schenkeln eine Erregerwicklung aufweisen, deren Polarität umschaltbar und die mit einem in seiner Stromstärke steuerbaren Strom beaufschlagbar ist. Die Erregerwicklung kann so geschaltet sein, daß sie entweder das Magnetfeld des Permanentmagneten verstärkt, was für Transportzwecke notwendig sein kann oder die Erregerwicklung kann so geschaltet sein, daß ihr Magnetfeld das Magnetfeld des Permanentmagneten schwächt oder sogar eine Entmagnetisierung des Permanentmagneten herbeiführt, um den transportierten Gegenstand abzulegen und ihn gegebenenfalls zu entmagnetisieren, wenn ein Wechselmagnetfeld abnehmender Amplitude erzeugt wird.

Zum Transport stangenförmiger Werkstücke ist es vorteilhaft, wenn in weiterer Ausgestaltung der Erfindung die Magnetpole des Hebemagneten zueinander geneigte Polflächen aufweisen, die ein Aufnahmeprisma für die zu transportierenden Werkstücke bilden. Der Winkel zwischen den Polflächen kann vorzugsweise 120° betragen.

Eine besonders vorteilhafte Ausgestaltung nach der Erfindung ergibt sich dadurch, daß mehrere Hebemagnete hintereinander und/oder nebeneinander mit abwechselnder Polarität getrennt durch Luftspalte oder amagnetische Scheiben zu einem Block zusammengefaßt sind. Hierdurch ergibt sich eine Anordnung mehrerer Magnete mit den weiter oben beschriebenen Anordnungsmöglichkeiten der Sensoreinrichtungen, so daß eine flächenhafte Transporteinrichtung entsteht, die an vielen Stellen Sensoreinrichtungen aufweist, wodurch eine besonders hohe Richtungsempfindlichkeit beim Aufsuchen eines Werkstückes und eine genaue Lagebestimmung der Transportvorrichtung in Bezug auf das Werkstück möglich ist.

Eine vorteilhafte weitere Ausgestaltung dieser flächenhaften Anordnung ergibt sich dadurch, daß die Magnete untereinander im Bereich der Luftspalte durch Eisenleitstücke verbunden sind und daß in diesen Bereichen zusätzliche Erregerwicklungen und/oder Sensoreinrichtungen angeordnet sind. Hierdurch ist eine Transportvorrichtung mit einer großen Haftfläche geschaffen, die in viele Hebemagnete mit entsprechend vielen Sensoreinrichtungen unterteilt ist, wodurch aufgrund dieses Flächenrasters nicht nur eine besonders hohe Richtungsempfindlichkeit beim Aufsuchen eines Werkstückes geschaffen wird, sondern mittels dieser Unterteilung einer Hebemagnetfläche in Hebemagnete und Sensoreinrichtungen auch die Erkennung der Abmessungen eines Werkstückes ermöglicht wird, insbesondere wenn zumindest einer der Hebemagnete mit ausfahrbaren Teilen und diesen zugeordneten Sensoreinrichtungen versehen ist. Auf diese Weise kann zwischen Werkstücken unterschiedlicher Abmessungen bzw. zwischen Werkstücken und anderen Einrichtungen unterschieden werden.

Weitere Ausgestaltungen der Erfindung ergeben sich aus den Unteransprüchen in Verbindung mit der Beschreibung und der Zeichnung, in welcher die Erfindung beispielsweise dargestellt ist. In dieser zeigen :

Figur 1 eine teilweise geschnittene schaubildliche Darstellung eines Hebemagneten einer Transportvorrichtung mit einer Sensoreinrichtung ;

Figur 2 eine weitere Ausführungsform in schaubildlicher Darstellung und teilweise geschnitten ;

Figur 3 eine weitere Ausführungsform in schaubildlicher Darstellung ;

Figur 4 eine Ansicht eines Hebemagneten für stangenförmige Werkstücke ;

Figur 5 eine Seitenansicht der Ausführungsform nach Fig. 4 ;

Figur 6 eine Variante zur Ausführungsform nach Fig. 4 ;

Figur 7 eine weitere Ausführungsform eines Hebemagneten ; und

Figur 8 eine Ausführungsform eines veränderbaren Hebemagneten mit ausfahrbaren Teilen.

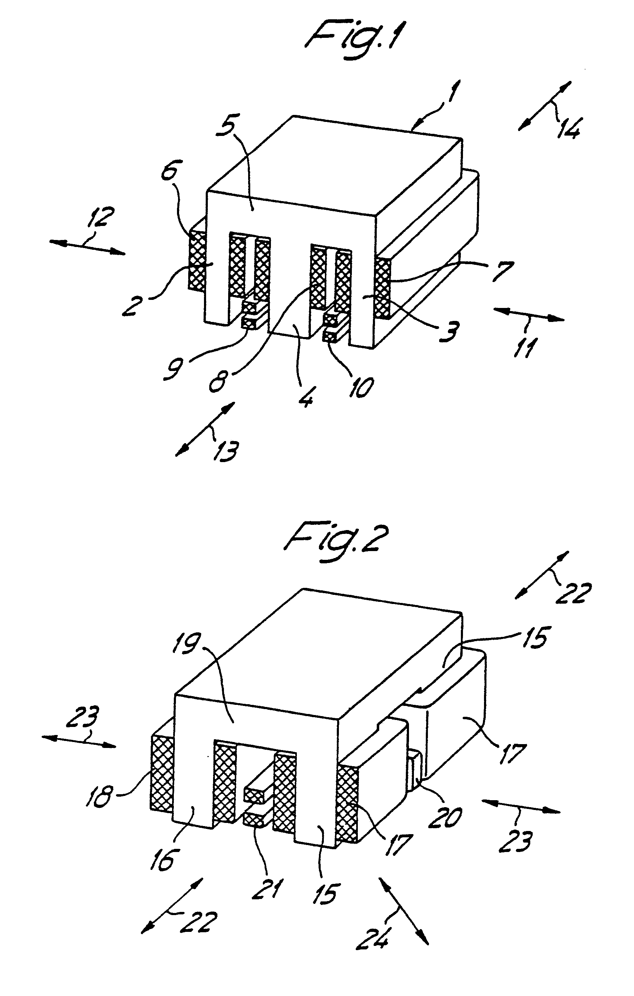

In Fig. 1 ist ein Hebemagnet 1 einer Transportvorrichtung in schaubildlicher Weise dargestellt, der drei Schenkel 2, 3 und 4 aufweist, die durch ein Joch 5 miteinander verbunden sind. Es handelt sich also um einen mehrpoligen Magneten. Die Schenkel 2, 3 und 4 tragen Erregerwicklungen 6, 7 und 8, die an eine nicht dargestellte Stromquelle angeschlossen und mit verschiedenen Stromarten, d. h. mit Wechselstrom, Gleichstrom, Gleichstrom mit überlagertem Wechselstrom oder mit nicht geglättetem Gleichstrom beaufschlagbar sind.

Zwischen den Schenkeln 2 und 4 einerseits und den Schenkeln 4 und 3 andererseits ist jeweils eine Induktionsspule 9 und 10 als Sensoreinrichtung angeordnet, die sich im Streufluß zwischen den Schenkeln bzw. Eisenleitstücken befinden und in welchen bei Änderung des Magnetfeldes durch Annäherung eines ferromagnetischen Körpers eine Spannung induziert wird, die als Signal für Steuerzwecke herangezogen wird. Aber auch bei Annäherung eines metallisch leitenden Körpers, der nicht ferromagnetisch ist, ist eine Veränderung des Magnetfeldes feststellbar, welches durch die Sensoreinrichtung, die im dargestellten Beispiel als Spule, ausgeführt ist, festegestellt werden kann. Die Sensoreinrichtung kann auch, falls dies die Stromart, mit welcher der Magnet betrieben wird, erfordert, auch als Halbleiterplättchen ausgeführt sein. Dies ist insbesondere dann der Fall, wenn die Erregerwicklungen mit Gleichstrom beaufschlagt werden. Da im dargestellten Ausführungsbeispiel zwei Induktions- bzw. Meßspulen 9 und 10 als Sensoreinrichtung vorgesehen sind, läßt sich anhand der in diesen Spulen induzierten Spannung erkennen, ob sich der Hebemagnet einem Werkstück mit seiner linken oder mit seiner rechten Seite annähert. Außerdem ist durch diese beiden Meßspulen feststellbar, ob sich das Werkstück zentrisch in Bezug auf die drei nebeneinander liegenden Schenkeln bzw. Pole des Hebemagneten befindet, da diese Meßspulen symmetrisch in Bezug auf das Zentrum des Hebemagneten angeordnet sind. Diese beschriebene Emfpindlichkeit besteht in Richtung der Doppelpfeile 11 und 12, während in Richtung der Doppelpfeile 13 und 14 nur feststellbar ist, ob sich das Werkstück dem Magneten nähert. Die zentrische Lage in Bezug auf die Achsrichtung der Doppelpfeile 13 und 14 ist nur insofern feststellbar, als die induzierte Spannung größer ist wenn das Werkstück sich vollständig unter dem Magneten befindet gegenüber einer Lage des Werkstückes, in welcher sich das Werkstück seitlich neben dem Haftmagneten 1 befindet.

Eine Verbesserung der Richtungsempfindlichkeit läßt sich grundsätzlich dadurch erzielen, daß die Sensoreinrichtungen, nicht wie im Falle des Ausführungsbeispiels der Fig. 1 in Reihe hintereinander, sondern nach einem Flächenmuster verteilt sind, d. h. die Sensoreinrichtungen sind nicht nur in Reihe hintereinander sondern auch nebeneinander angeordnet.

Eine Ausgestaltung, die diese Möglichkeit verwirklicht ist in Fig. 2 dargestellt. Dort sind zwei Magnete mit den Schenkeln 15 und 16 die Erregerwicklungen 17 bzw. 18 tragen, über ein gemeinsames Joch 19 zu einem vier Pole aufweisenden Block zusammengefaßt, wobei zwischen den Schenkeln 15 des einen Magneten, den Schenkeln 16 des anderen Magneten und zwischen den Schenkeln 15 und 16 an beiden Seiten des gesamten Magnetblockes jeweils eine Meßspule 21 bzw. 20 vorgesehen ist, so daß insgesamt vier Meßspulen vorhanden sind, welche nicht wie bei der Ausführungsform nach Fig. 1 in einer Reihe sondern nach einem Flächenmuster verteilt sind. Bei einer symmetrischen Ausgestaltung des Magnetblockes liegen diese Meßspulen im wesentlichen in den Ecken eines Quadrates. Aufgrund dieser flächenhaften Verteilung der Meßspulen, von denen in der Zeichnung nur die Spulen 20 und 21 zwischen zwei Schenkeln 15 bzw. zwischen dem einen Schenkelpaar 15 und 16 dargestellt sind, läßt sich die Annäherung eines ferromagnetischen Werkstückes nicht nur aus allen vier Hauptrichtungen, die durch die Pfeile 22 und 23 dargestellt sind, sondern auch aus jeder beliebigen Zwischenrichtung, feststellen, weil bei jeder Annäherung, die nicht in Richtung der Hauptachsen entsprechend den Doppelpfeilen 22 und 23 erfolgt immer zwei Meßspulen beeinflußt werden, wodurch aus der Intensitätsverteilung auf die Richtung geschlossen werden kann. Bei einer Annäherung in Richtung des Doppelpfeiles 24, welcher auf der Winkelhalbierenden des jenigen Winkels liegt, den die Hauptachsen der Meßspulen 20 und 21 miteinander einschließen, wird, weil der Abstand zu beiden Meßspulen der gleiche ist, in beiden Meßspulen auch die gleiche Spannunginduziert, so daß erkennbar ist, daß sich der Magnet gegenüber dem ferromagnetischen Körper unter einem Winkel von 45° bezogen auf eine seiner Hauptachsen nähert, wenn man unterstellt, daß der Magnetblock quadratischen Aufbau aufweist.

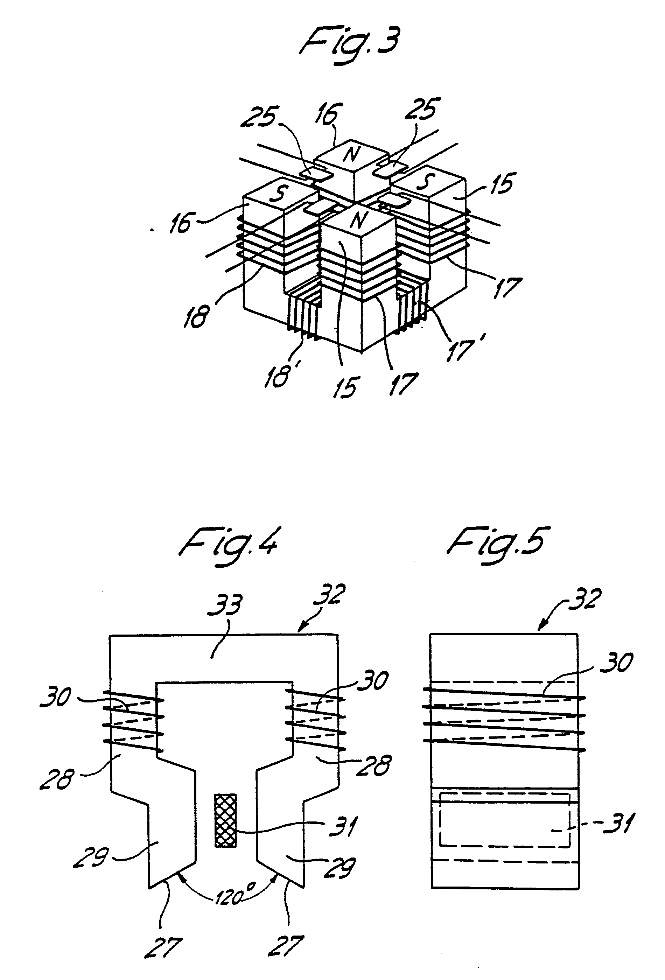

Fig. 3 zeigt ebenfalls einen Magnetblock bestehend aus zwei Schenkeln 15 und zwei Schenkeln 16, wobei jedoch zusätzlich zu den Erregerwicklungen 17 und 18 zwischen den jeweiligen Schenkeln weitere Erregerwicklungen 17' und 18' vorgesehen sind. Wegen dieser zusätzlichen Erregerwicklungen ist das Joch nicht wie in Fig. 2 dargestellt, geschlossen ausgeführt, sondern weist entsprechende Durchbrechungen für die Anbringung der zusätzlichen Erregerwicklungen 17' und 18' auf. Eine weitere Abweichung gegenüber der Ausgestaltung nach Fig. 2 besteht darin, daß an Stelle von Meßspulen Halbleiterplättchen 25 zwischen den beiden Schenkeln 15 und den Schenkeln 16 einerseits sowie zwischen jeweils einander benachbarten Schenkeln 15 und 16 angeordnet sind, so daß an Stelle der vier Meßspulen bei der Ausführungsform nach Fig. 2 nun vier Halbleiterplättchen vorgesehen sind, die mit einer nicht dargestellten Stromquelle in Verbindung stehen. Bei Änderung des Magnetfeldes tritt eine Kennlinienänderung bei den Halbleiterplättchen ein, was in einer Spannungsänderung zum Ausdruck kommt, die als Steuersignal verwendbar ist.

Bei den Ausführungsformen nach den Fig. 2 und 3 handelt es sich also um die kombination von zwei zweipoligen Magneten die über Eisenleitstücke untereinander verbunden sind, wobei jeder Schenkel eine. Erregerwicklung bei der Ausführungsform nach Fig. 2 aufweist und bei der Ausführungsform nach Fig. 3 zwischen den Schenkeln auf den verbindenden Eisenleitsücken noch zusätzliche Erregerwicklungen vorgesehen sind.

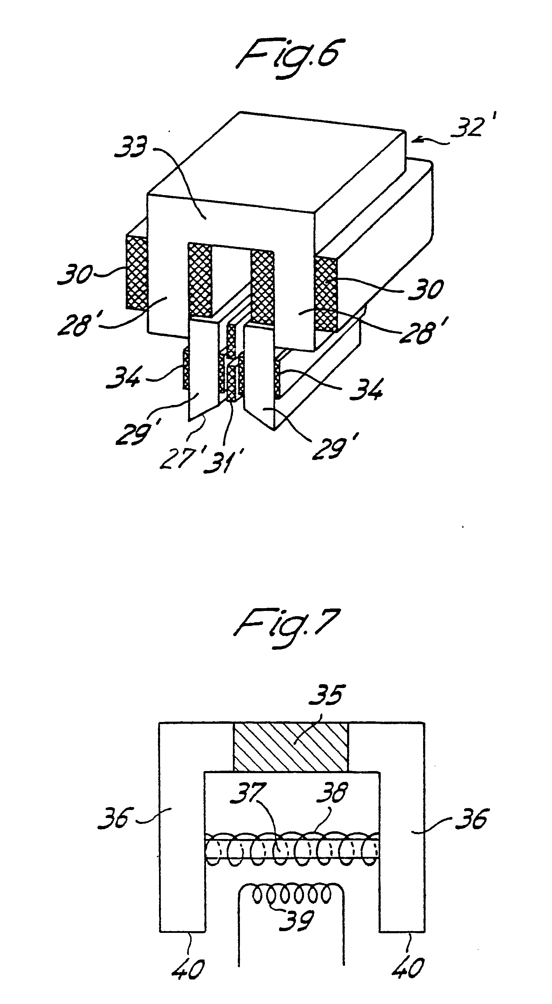

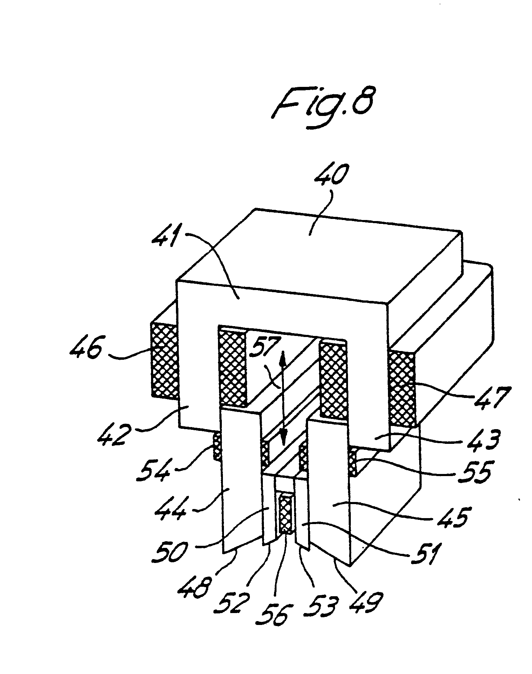

In den Fig. 4 und 5 ist ein Hebemagnet einer Transportvorrichtung dargestellt, der für den Transport von rotationssymmetrischen Werkstücken, insbesondere Stangenmaterial, dient und der zu diesem Zweck zueinander geneigte Pole 27 aufweist, die ein Aufnahmeprisma mit einem Öffnungswinkel von 120° bilden. Die Pole 27 befinden sich an den Enden von Schenkeln 28 die einen nach innen, d. h. gegeneinander abgesetzten Abschnitt 29 aufweisen, so daß der Abstand der Schenkel außerhalb der mit 30 bezeichneten Erregerwicklungen geringer ist als in dem Bereich der Erregerwicklung. Dies hat den Vorteil, daß der Streufluß zwischen den Schenkelabschnitten 29 größer ist als wenn diese Annäherung nicht vorhanden wäre. Auf diese Weise ist die Meßgenauigkeit der zwischen den Schenkelabschnitten 29 angeordneten Meßspulen 31 wesentlich erhöht, da diese Meßspulen die Änderungen des Streuflusses erfassen. An Stelle der Abkröpfung der Schenkel 29 ist es auch möglich diese Schenkel in gerader Ausführung auszubilden und Zwischenstücke anzusetzen, die den Zwischenraum zwischen den Schenkeln verkürzen und damit den Streufluß in dem Sinne beeinflussen, daß die Streuflußdichte bezogen auf die Flächeneinheit vergrößert wird. Eine solcher Hebemagnet 32' ist in Fig. 6 dargestellt, wobei die mittels eines Jochs 33 verbundenen Schenkel, die mit den Schenkeln 28 der Ausführungsform gemäß Fig. 4 vergleichbar sind, mit dem Bezugszeichen 28' und die mit den Abschnitten 29 gemäß Fig. 4 vergleichbaren Zwischenstücke mit 29' bezeichnet sind. Bei dieser Ausführungsform sind zusätzlich zu der zwischen den Zwischenstücken 29' angeordneten Sensoreinrichtungen 31' zwei weitere Sensoreinrichtungen 34 vorgesehen, die als Meßspulen ausgebildet und jeweils um ein Zwischenstück 29' herum angeordnet sind. 27' bezeichnet die Polfläche.

Bei der Ausführungsform gemäß Fig. 7 sind an einen Permanentmagneten 35 Eisenleitteile 36 angeschlossen, wobei diese Teile insgesamt einen im wesentlichen hufeisenförmigen Magneten bilden. Zwischen den Eisenleitteilen bzw. Schenkeln ist auf einem Eisenkern 37 eine Erregerwicklung 38 angeordnet, bei welcher die Stromstärke regelbar und die Polarität umschaltbar ist. Auf diese Weise ist es möglich ein Magnetfeld zu erzeugen, welches das Magnetfeld des Permanentmagneten entweder verstärkt oder schwächt. Es ist sogar möglich mit Hilfe dieser zusätzlichen Erregerwicklung den Permanentmagneten zu entmagnetisieren. Aufgrund dieser Möglichkeiten können bei einer Verstärkung des Magnetfeldes schwerere Werkstücke transportiert werden, bei einer Schwächung des Magnetfeldes des Permanentmagneten können transportierte Werkstücke abgelegt werden und beim Entmagnetisieren können die abgelegten Werkstücke entmagnetisiert werden. Mit Hilfe dieser Erregerwicklung ist es dann wieder möglich den Permanentmagneten zu magnetisieren. Mit 39 ist eine Sensoreinrichtung in Form einer Induktionsspule bezeichnet, deren Wirkung im Zusammenhang mit anderen Ausführungsformen bereits eingehend beschrieben wurde. Auch bei diesem Magneten wird bei einer Annäherung des Magneten an einen ferromagnetischen Körper das Magnetfeld zwischen seinen Polen, die mit 40 bezeichnet sind verändert, so daß in der Induktionsspule 39 eine Spannung induziert wird, die als Steuersignal verwendbar ist.

Bei der Ausführungsform nach Fig. 8 wird wiederrum der Grundgedanke einer Verengung des Abstandes zwischen den Magnetpolen verwirklicht, um eine größere Meßempfindlichkeit zu erzielen. Diese Verengung wird hier durch das Ausfahren von mit den Magnetpolen in Verbindung stehenden Eisenleitteilen herbeigeführt. Der in Fig. 8 dargestellte Hebemagnet 40 weist ein Joch 41 und zwei Schenkel 42 und 43 auf, die durch nach innen angesetzte Zwischenstücke 44 und 45 verlängert sind, die gleichzeitig einen engeren Abstand zwischen den Schenkeln des Magneten herbeiführen. Um die Schenkel 42 und 43 sind Erregerwicklungen 46 und 47 angeordnet. Die Zwischenstücke 44 und 45 weisen schräg zueinander geneigte Polflächen 48 und 49 auf, die einen Winkel von etwa 120° miteinander einschließen.

In dem Raum zwischen den Zwischenstücken 44 und 45 sind ausschiebbare oder ausfahrbare Teile 50 und 51 angeordnet, welche in ihrem ausgefahrenen Zustand eine Verlängerung der Zwischenstücke 44 und 45 bilden und an ihrer Unterseite Polflächen 52 und 53 aufweisen, die den gleichen Neigungswinkel wie die Polflächen 48 und 49 besitzen. Aus diesem Grunde fluchten die Polflächen 48 und 52 bzw. 49 und 53 in der vollständig eingefahrenen Stellung der ausfahrbaren Teile 50 und 51 miteinandern.

In der eingefahrenen Stellung dient der Hebemagnet zum Transport von stangenförmigen Werkstücken mit größerem Durchmesser, während bei kleinen Durchmessern die Teile 50 und 51 so weit ausgefahren werden, daß die Werkstücke mit den Polflächen 52 und 53 erfaßt werden können. Die ausfahrbaren Teile 50 und 51 stellen somit eine Verlängerung der Eisenleitstücke dar und weisen demzufolge die gleiche Polarität wie die mit ihnen in Verbindung stehenden Eisenleitstücke 44 und 45 auf. Die Teile 50 und 51 bilden also einen ausfahrbaren Magneten, der die gleiche Polarität bzw. die Polteilung wie der Gesamtmagnet aufweist.

Um die Zwischenstücke 44 und 45 sind Induktionsspulen 54 und 55 angeordnet, die als Sensoreinrichtungen dienen und die Änderungen des Magnetfeldes aufgrund einer Annäherung eines ferromagnetischen Körpers feststellen. Eine weitere Sensoreinrichtung in Form einer Induktionsspule 56 ist zwischen den ausfahrbaren Teilen 50 und 51 vorgesehen. An Stelle der Induktionsspule 56 kann auch ein Halbleiterplättchen vorgesehen sein, was insbesondere dann von Vorteil ist, wenn der Magnet als Gleichstrommagnet ausgebildet ist. Die Teile 50 und 51 sind in Richtung des Doppelpfeiles 57 frei verschiebbar geführt, so daß diese Teile in der dargestellten Ausführungsform stets nach unten überstehen. Der Abstand zwischen den Polflächen 52 und 53 ist, weil es sich um einschiebbare Teile handelt zwangsläufig geringer als der Abstand zwischen Polflächen 48 und 49, so daß die zwischen den Teilen 50 und 51 angeordnete Meßspule 56 bei ausgefahrenen Teilen 50 und 51 sehr viel exakter auf eine Änderung des Magnetfeldes ansprechen kann, als wenn diese Teile sich in ihrer eingefahrenen Stellung befinden, weil dann die Streuflußänderung zwischen den Polflächen 48 und 49 in ihrer Gesamtheit und nicht mehr die Streuflußänderung zwischen den enger liegenden Polflächen 52 und 53 maßgebend für die induzierte Spannung in der Induktionsspule 56 ist. Wird mit Hilfe dieser Sensoreinrichtung das aufzusuchende Werkstück gefunden und handelt es sich um einen Gegenstand größerer Abmessungen, so wird beim Einschalten des Erregerstromes dieses Werkstück an die Polflächen 48 und 49 gezogen, wodurch aufgrund der freien Verschiebbarkeit die Teile 50 und 51 in ihre innere Stellung entsprechend dem Doppelpfeil 57 nach oben gedrückt werden. In dieser Stellung kommt es auf eine Meßgenauigkeit nicht mehr an, weil das Werkstück bereits erfaßt ist.

Der Hebemagnet kann an jeder beliebigen Transportvorrichtung, z. B. nach Art eines Kranes, angeordnet sein.

**Patentansprüche**

1. Hebevorrichtung mit zumindest einem Haftmagneten und einer ihm zugeordneten davon unabhängigen Sensoreinrichtung, durch die die Änderung des Magnetfeldes infolge Eindringens eines ferromagnetischen oder eines entsprechend Metallen elektrisch leitenden Teiles in das Magnetfeld erfaßbar und zur Auslösung von Steuerungsvorgängen verwendbar ist, dadurch gekennzeichnet, daß mindestens zwei Sensoreinrichtungen (9, 10 ; 20, 21 ; 25 ; 31 ; 31' ; 34, 39 ; 54, 55, 56) symmetrisch in bezug auf das Zentrum und die beiden horizontalen Hauptachsen der Magnetpolanordnung (2, 3, 4 ; 15, 16 ; 28, 29 ; 28', 29' ; 36 ; 42, 43, 44, 45) angeordnet sind.

2. Hebevorrichtung nach Anspruch 1, dadurch gekennzeichnet, daß bei Anordnung einer der Sensoreinrichtungen (56) zwischen den Polen (48, 52 ; 49, 53) der Polabstand veränderbar ist.

3. Hebevorrichtung nach Anspruch 1 oder 2, dadurch gekennzeichnet, daß mindestens ein Eisenleitstück (42, 44, 50 ; 43, 45, 51) des Hebemagneten, das die Erregerwicklung (46 ; 47) mit dem Magnetpol (48, 52 ; 49, 53) verbindet aus mindestens zwei wenigstens teilweise teleskopartig ineinanderschiebbaren Teilen aufgebaut ist, und daß eine der Sensoreinrichtungen (56) dem ausfahrbaren Teil bzw. den am weitesten ausfahrbaren Teilen zugeordnet ist bzw. sind.

4. Hebevorrichtung nach Anspruch 3, dadurch gekennzeichnet, daß die verschiebbaren Teile (50, 51) frei verschiebbar geführt sind.

5. Hebevorrichtung nach Anspruch 3, gekennzeichnet durch eine Antriebsvorrichtung für die Verschiebung der ausfahrbaren Teile (50, 51) die einen Elektromotor oder eine hydraulische oder pneumatische Antriebseinheit umfaßt.

6. Hebevorrichtung nach einem der Ansprüche 1 bis 5, dadurch gekennzeichnet, daß als Sensoreinrichtung (9, 10 ; 20, 21 ; 31 ; 31', 34 ; 39 ; 54, 55, 56) eine Induktionsspule dient.

7. Hebevorrichtung nach einem der Ansprüche 1 bis 5, dadurch gekennzeichnet, daß als Sensoreinrichtung (25) ein Halbleiterplättchen dient.

8. Hebevorrichtung nach einem der Ansprüche 1 bis 7, dadurch gekennzeichnet, daß die Sensoreinrichtungen (20, 21 ; 25) nach Art einer Brückenschaltung geschaltet sind.

9. Hebevorrichtung nach einem der Ansprüche 1 bis 8, dadurch gekennzeichnet, daß die Stromstärke in den Erregerwicklungen (6, 7, 8 ; 17, 18 ; 17', 18' ; 30 : 38 ; 46, 47) des bzw. der Hebemagnete beim Aufsuchen der Werkstücke geringer als beim Transport der Werkstücke ist.

10. Hebevorrichtung nach einem der Ansprüche 1 bis 9, dadurch gekennzeichnet, daß mindestens einer der Hebemagnete zwei- oder mehrpolig ausgebildet ist.

11. Hebevorrichtung nach einem der Ansprüche 1 bis 10, dadurch gekennzeichnet, daß der Abstand zwischen den Eisenleitstücken (28, 29 ; 28', 29') des Hebemagneten (32, 32') die Verbindung zwischen der Erregerwicklung (30) und den Polen (27 ; 27') herstellen durch Formgebung der Eisenleitstücke oder durch an diesen angebrachte Zwischenstücke (29') verengt ist.

12. Hebevorrichtung nach einem der Ansprüche 1 bis 11, dadurch gekennzeichnet, daß mindestens einer der Hebemagnete sowohl für Gleichstromspeisung als auch für Wechselstromspeisung ausgelegt ist.

13. Hebevorrichtung nach Anspruch 12, dadurch gekennzeichnet, daß mindestens einer der Hebemagnete mindestens eine Wicklung aufweist und einer der Wicklungen aus mehreren parallel verlaufenden Drähten aufgebaut ist, die bei Wechselstromspeisung parallel und bei Gleichstromspeisung hintereinander geschaltet sind.

14. Hebevorrichtung nach Anspruch 12 oder 13, dadurch gekennzeichnet, daß beim Transport der Werstücke eine Gleichstromspeisung und kurz vor oder nach dem Ablegen der Werkstücke eine Wechselstromspeisung des Hebemagneten erfolgt, welch letztere beim Abschalten ein Wechselmagnetfeld abnehmender Amplitude erzeugt.

15. Hebevorrichtung nach Anspruch 14, dadurch gekennzeichnet, daß beim Umschalten von Gleichstromspeisung auf Wechselstrospeisung kurzzeitig die Amplitude des Wechselmagnetfeldes gegenüber dem Magnetfeld bei Gleichstromspeisung erhöht ist.

16. Hebevorrichtung nach einem der Ansprüche 1 bis 11, dadurch gekennzeichnet, daß mindestens einer der Hebemagnete für Drehstromspeisung ausgelegt ist und eine durch drei teilbare Polzahl aufweist.

17. Hebevorrichtung nach einem der Ansprüche 1 bis 11, dadurch gekennzeichnet, daß mindestens einer der Hebemagnete als Permanentmagnet (35) ausgebildet ist und zwischen seinen Polen (36) eine Erregerwicklung (38) aufweist, deren Polarität umschaltbar und die mit einem in seiner Stärke steuerbaren Strom beaufschlagbar ist.

18. Hebevorrichtung nach einem der Ansprüche 1 bis 17, dadurch gekennzeichnet, daß die Magnetpole mindestens eines Hebemagneten zueinander geneigte Polflächen (27) aufweisen, die ein Aufnahmeprisma für die zu transportierende Werkstücke bilden.

19. Hebevorrichtung nach Anspruch 18, dadurch gekennzeichnet, daß der Winkel zwischen den Polflächen (27) vorzugsweise 120° beträgt.

20. Hebevorrichtung nach einem der Ansprüche 1 bis 19, dadurch gekennzeichnet, daß mehrere Hebemagnete (15, 16) hintereinander und/oder nebeneinander mit abwechselnder Polarität getrennt durch Luftspalte oder amagnetische Scheiben zu einem Block zusammengefaßt sind.

21. Hebevorrichtung nach Anspruch 20, dadurch gekennzeichnet, daß die Magnete (15, 16) untereinander im Bereich der Luftspalte durch Eisenleitstücke verbunden sind und daß in diesen Bereichen zusätzliche Erregerwicklungen (17', 18') und/oder Sensoreinrichtungen (25) angeordnet sind.

**Claims**

1. A lifting device having at least one lifting magnet and a sensor device associated with it and independent of it, through which changes in the magnetic field following penetration by a ferromagnetic part or by a corresponding metal electrically-conductive part the magnetic field can be detected and used to trigger control operations, characterised in that at least two sensor devices (9, 10 ; 20, 21 ; 25 ; 31 ; 31' ; 34, 39 ; 54, 55, 56) are disposed symmetrically relative to the centre and to the two horizontal main axes of the magnetic pole arrangement (2, 3, 4 ; 15, 16 ; 28, 29 ; 28',29' ; 36 ; 42, 43, 44, 45).

2. A lifting device according to claim 1, characterised in that when one of the sensor devices (56) is disposed between the poles (48, 52 ; 49, 53), the pole distance is variable.

3. A lifting device according to claim 1 or 2, characterised in that at least one iron conducting piece (42, 44, 50 ; 43, 45, 51) of the lifting magnet, which connects the excitation winding (46 ; 47) to the magnetic pole (48, 52 ; 49, 53), consists of at least two sections which may be at least partially inserted into one another in a telescopic manner, and that one of the sensor devices (56) is associated with the extendible part or the parts which extend furthest.

4. A lifting device according to claim 3, characterised in that the slidable parts (50, 51) are guided in a freely slidable manner.

5. A lifting device according to claim 3, characterised by a drive device for sliding the extendible parts (50, 51) which comprises an electromotor or a hydraulic or pneumatic drive unit.

6. A lifting device according to one of claims 1 to 5, characterised in that an induction coil serves as the sensor device (9, 10 ; 20, 21 ; 31 ; 31', 34 ; 39 ; 54, 55, 56).

7. A lifting device according to one of claims 1 to 5, characterised in that a semiconductor chip serves as the sensor device (25).

8. A lifting device according to one of claims 1 to 7, characterised in that the sensor devices (20, 21 ; 25) are connected in the manner of a bridge connection.

9. A lifting device according to one of claims 1 to 8, characterised in that the current intensity the excitation windings (6, 7, 8 ; 17, 18 ; 17', 18' ; 30 ; 38 ; 46, 47) of the lifting magnet or magnets is lower during detection of the workpieces than it is during transportation of the workpieces.

10. A lifting device according to one of claims 1 to 9, characterised in that at least one of the lifting magnets is bipolar or multipolar.

11. A lifting device according to one of claims 1 to 10, characterised in that the clearance between the iron conducting pieces (28, 29 ; 28', 29') of the lifting magnet (32, 32') which provide the connection between the excitation winding (30) and the poles (27 ; 27') is narrowed by the shape of the iron conducting pieces or by intermediate pieces (29') mounted on them.

12. A lifting device according to one of claims 1 to 11, characterised in that at least one of the lifting magnets is designed for both the supplying of direct current and of alternating current.

13. A lifting device according to claim 12, characterised in that at least one of the lifting magnets has at least one winding and one of the windings comprises a plurality of parallel wires, which are in parallel connection for the supplying of alternating current and connected in series for direct current.

14. A lifting device according to claim 12 or 13, characterised in that direct current is supplied to the lifting magnet during transportation of the workpieces, and alternating current is supplied to the lifting magnet either shortly before or shortly after the workpieces are put down, said latter current supply generating an alternating magnetic field of decreasing amplitude during switch-off.

15. A lifting device according to claim 14, characterised in that, when switching over from direct current to alternating current, the amplitude of the alternating magnetic field is momentarily increased relative to the magnetic field during direct current supply.

16. A lifting device according to one of claims 1 to 11, characterised in that at least one of the lifting magnets is designed for three-phase current and has a number of poles divisable by three.

17. A lifting device according to one of claims 1 to 11, characterised in that at least one of the lifting magnets is a permanent magnet (35) and is provided between its poles (36) with an excitation winding (38) whose polarity is reversible and which can be subjected to a current, the intensity of which is controllable.

18. A lifting device according to one of claims 1 to 17, characterised in that the magnetic pole of at least one lifting magnet has pole surfaces (27) inclined towards each other which form a location prism for the workpieces to be transported.

19. A lifting device according to claim 18, characterised in that the angle between the pole surfaces (27) is preferably 120°.

20. A lifting device according to one of claims 1 to 19, characterised in that a plurality of lifting magnets (15, 16) are combined in series and/or in parallel with alternating polarity and separated by an air gap or non-magnetic discs to form a block.

21. A lifting device according to claim 20, characterised in that the magnets (15, 16) are interconnected by iron conducting pieces in the region of the air gap, and that additional excitation windings (17', 18') and/or sensor devices (25) are disposed in these regions.

**Revendications**

1. Dispositif de levage comprenant au moins un électro-aimant de levage et un détecteur qui, associé à cet électro-aimant mais indépendant de lui, permet à la variation du champ magnétique, due à la pénétration d'une pièce ferromagnétique ou d'une pièce conductrice de l'électricité à la manière de métaux dans le champ magnétique, d'être déterminée et utilisée pour le déclenchement de processus de commande, caractérisé en ce qu'au moins deux détecteurs (9, 10 ; 20, 21 ; 25 ; 31 ; 31', 34 ; 39 ; 54, 55, 56) sont montés symétriquement par rapport au centre et aux deux axes horizontaux principaux de l'ensemble de pôles magnétiques (2, 3, 4 ; 15, 16 ; 28, 29 ; 28', 29' ; 36 ; 42, 43, 44, 45).

2. Dispositif de levage selon la revendication 1, caractérisé en ce que, l'un (56) des détecteurs étant monté entre les pôles (48, 52 ; 49, 53), la distance polaire est variable.

3. Dispositif de levage selon la revendication 1 ou 2, caractérisé en ce qu'au moins une partie conductrice (42, 44, 50 ; 43, 45, 51) en fer de l'électro-aimant de levage, laquelle relie l'enroulement d'excitation (46 ; 47) au pôle magnétique (48, 52 ; 49, 53), est formée d'au moins deux éléments susceptibles de coulisser au moins en partie télescopiquement les uns dans les autres et en ce que l'un (56) des détecteurs est associé aux éléments susceptibles de coulisser vers l'extérieur et notamment aux éléments susceptibles de coulisser le plus loin vers l'extérieur.

4. Dispositif de levage selon la revendication 3, caractérisé en ce que les éléments susceptibles de coulisser (50, 51) sont guidés de manière à pouvoir coulisser librement.

5. Dispositif de levage selon la revendication 3, caractérisé par un mécanisme d'entraînement pour le coulissement des éléments (50, 51) déplaçables vers l'extérieur, lequel mécanisme d'entraînement comprend un moteur électrique ou un organe moteur hydraulique ou pneumatique.

6. Dispositif de levage selon l'une quelconque des revendications précédentes, caractérisé en ce qu'une bobine d'induction sert de détecteur (9, 10 ; 20, 21 ; 31 ; 31', 34 ; 39 ; 54, 55, 56).

7. Dispositif de levage selon l'une quelconque des revendications 1 à 5, caractérisé en ce qu'une plaquette à semiconducteurs sert de détecteur (25).

8. Dispositif de levage selon l'une quelconque des revendications précédentes, caractérisé en ce que les détecteurs (20, 21 ; 25) sont connectés à la manière d'un montage en pont.

9. Dispositif de levage selon l'une quelconque des revendications précédentes, caractérisé en ce que l'intensité du courant dans les enroulements d'excitation (6, 7, 8 ; 17, 18 ; 17', 18' ; 30 ; 38 ; 46, 47) de l'électro-aimant ou des électro-aimants de levage est plus faible en cas de recherche de pièces qu'en cas de transport de celles-ci.

10. Dispositif de levage selon l'une quelconque des revendications précédentes, caractérisé en ce qu'au moins l'un des électro-aimants de levage est bipolaire ou multipolaire.

11. Dispositif de levage selon l'une quelconque des revendications précédentes, caractérisé en ce que la distance entre les parties conductrices (28, 29 ; 28', 29') en fer de l'électro aimant de levage (32, 32'), qui établissent la liaison entre l'enroulement d'excitation (30) et les pôles (27 ; 27'), est réduite par une configuration appropriée des parties conductrices en fer ou au moyen de pièces intermédiaires (29') rapportées sur ces dernières.

12. Dispositif de levage selon l'une quelconque des revendications précédentes, caractérisé en ce qu'au moins l'un des électro-aimants de levage est conçu tant pour une alimentation en courant continu que pour une alimentation en courant alternatif.

13. Dispositif de levage selon la revendication 12, caractérisé en ce qu'au moins l'un des électro-aimants de levage présente au moins un enroulement et l'un des enroulements se compose de plusieurs fils s'étendant parallèlement qui sont montés en parallèle en cas d'alimentation en courant alternatif et en série en cas d'alimentation en courant continu.

14. Dispositif de levage selon la revendication 12 ou 13, caractérisé en ce que lors du transport des pièces il se produit une alimentation en courant continu et peu avant ou après la pose des pièces une alimentation en courant alternatif de l'électro-aimant de levage, laquelle dernière alimentation engendre lors de la mise hors circuit un champ magnétique alternatif d'amplitude décroissante.

15. Dispositif de levage selon la revendication 14, caractérisé en ce qu'au moment de passer de l'alimentation en courant continu à l'alimentation en courant alternatif l'amplitude du champ magnétique alternatif est durant un court laps de temps accrue par rapport au champ magnétique en cas d'alimentation en courant continu.

16. Dispositif de levage selon l'une quelconque des revendications 1 à 11, caractérisé en ce qu'au moins l'un des électro-aimants de levage est conçu pour une alimentation en courant triphasé et comporte un nombre de pôles divisible par trois.

17. Dispositif de levage selon l'une quelconque des revendications 1 à 11, caractérisé en ce qu'au moins l'un des électro-aimants de levage est réalisé en tant qu'aimant permanent (35) et présente entre ses pôles (36) un enroulement d'excitation (38) dont la polarité peut être inversée et auquel est applicable un courant réglable dans son intensité.

18. Dispositif de levage selon l'une quelconque des revendications précédentes, caractérisé en ce que les pôles magnétiques d'au moins un électro-aimant de levage présentent des faces polaires (27) inclinées l'une vers l'autre et qui forment un prisme de préhension pour les pièces à transporter.

19. Dispositif de levage selon la revendication 18, caractérisé en ce que l'angle que les faces polaires (27) font entre elles est de préférence de 120°.

20. Dispositif de levage selon l'une quelconque des revendications précédentes, caractérisé en ce que plusieurs électro-aimants de levage (15, 16) disposés les uns à la suite et/ou à côté des autres de façon que leurs polarités alternent, en étant séparés par des entrefers ou des disques magnétiques, sont réunis en un seul bloc.

21. Dispositif de levage selon la revendication 20, caractérisé en ce que les électro-aimants (15, 16) sont reliés entre eux au niveau des entrefers par des parties conductrices en fer et en ce que dans ces régions sont montés des enroulements d'excitation additionnels (17', 18') et/ou des détecteurs (25).

*Fig.1*

*Fig.2*

# Fig.3

# Fig.4

# Fig.5

*Fig.6*

*Fig.7*

# Fig.8